(19) Europäisches Patentamt / European Patent Office / Office européen des brevets

(11) **EP 2 310 815 B1**

(12) **FASCICULE DE BREVET EUROPEEN**

(45) Date de publication et mention de la délivrance du brevet:
**21.01.2015 Bulletin 2015/04**

(21) Numéro de dépôt: **09779971.2**

(22) Date de dépôt: **26.06.2009**

(51) Int Cl.:
***G01H 15/00*** *(2006.01)*

(86) Numéro de dépôt international:
**PCT/EP2009/058047**

(87) Numéro de publication internationale:
**WO 2010/003840 (14.01.2010 Gazette 2010/02)**

(54) **CAPTEUR D'IMPÉDANCE ACOUSTIQUE PRÉVU POUR MESURER L'IMPÉDANCE ACOUSTIQUE D'ENTRÉE D'UN GUIDE D'ONDE**

IMPEDANZSENSOR ZUR MESSUNG DER AKUSTISCHEN EINGANGSIMPEDANZ EINES WELLENLEITERS

ACOUSTIC IMPEDANCE SENSOR DESIGNED TO MEASURE THE INPUT ACOUSTIC IMPEDANCE OF A WAVEGUIDE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.06.2008 FR 0854310**

(43) Date de publication de la demande:
**20.04.2011 Bulletin 2011/16**

(73) Titulaires:
• **Université du Maine**
**72085 Le Mans Cedex 9 (FR)**
• **Centre de Transfert de Technologie du Mans**
**72000 Le Mans (FR)**

(72) Inventeurs:
• **DALMONT, Jean-Pierre**
**F-72380 La Guierche (FR)**
• **LE ROUX, Jean-Christophe**
**F-72000 Le Mans (FR)**

(74) Mandataire: **Maillet, Alain**
**Cabinet Le Guen Maillet**
**5, place Newquay**
**B.P. 70250**
**35802 Dinard Cedex (FR)**

(56) Documents cités:
**US-A- 4 397 187**

• **SINGH R ET AL: "Acoustic impedance measurement using sine sweep excitation and known volume velocity technique" JOURNAL OF THE ACOUSTICAL SOCIETY OF AMERICA USA, vol. 64, no. 4, octobre 1978 (1978-10), pages 995-1003, XP1425209 ISSN: 0001-4966 cité dans la demande**
• **BENADE A H ET AL: "Survey of impedance methods and a new piezo-disk-driven impedance head for air columns" JOURNAL OF THE ACOUSTICAL SOCIETY OF AMERICA USA, vol. 81, no. 4, avril 1987 (1987-04), pages 1152-1167, XP1425258 ISSN: 0001-4966**

**Description**

La présente invention concerne un capteur d'impédance acoustique prévu pour mesurer l'impédance acoustique d'entrée d'un guide d'onde.

Dans de nombreux domaines d'application, la caractérisation d'éléments passifs acoustiques par mesure de leur impédance acoustique est nécessaire, par exemple dans le domaine des instruments de musique où la connaissance des caractéristiques intrinsèques d'un instrument à vent permet de contrôler l'accord de cet instrument et/ou de modéliser son fonctionnement. Dans le domaine également des matériaux où la connaissance des caractéristiques intrinsèques d'un matériau telles que par exemple son coefficient d'absorption, permet de classifier ce matériau et de le comparer à d'autres types de matériau.

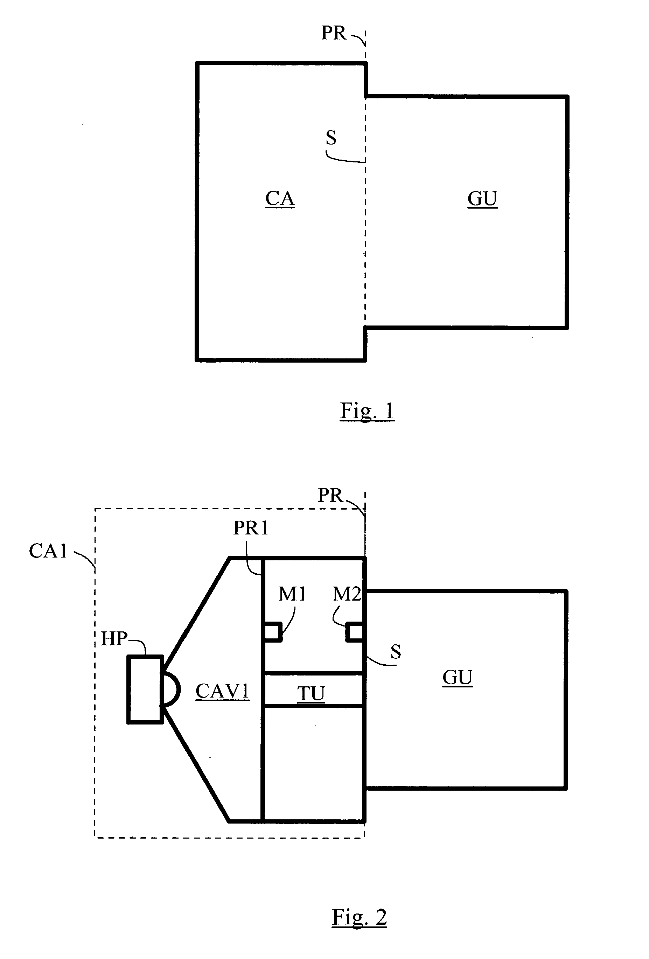

La caractérisation d'éléments passifs acoustiques est rendue possible par la mise en oeuvre d'un capteur d'impédance acoustique tel que illustré à la Fig. 1.

Le capteur d'impédance acoustique CA est associé de manière étanche à une charge qui peut être assimilée, d'un point de vue acoustique, à un guide d'onde GU.

Dans le cas où l'élément mesuré est un échantillon de matériau, l'échantillon est placé dans un tube rigide fermé à l'une de ses extrémités et l'extrémité ouverte du tube est fixée de manière étanche au capteur d'impédance acoustique CA.

Une fois la charge en place, le capteur d'impédance acoustique CA est excité par une source sonore commandée électriquement de manière à générer un débit acoustique contrôlé pour une plage de fréquences prédéterminée. Le capteur d'impédance acoustique CA détermine alors l'impédance acoustique Z de la surface plane S définie sur un plan dit de référence PR pour la plage de fréquences de la source. Ce plan de référence PR est parallèle à la section transversale du guide d'onde GU et est localisé au niveau d'une extrémité ouverte du guide d'onde généralement appelée entrée du guide d'onde. La charge est alors caractérisée par l'impédance acoustique ainsi déterminée, impédance acoustique qu'il est commun d'appeler impédance acoustique d'entrée.

L'impédance acoustique d'entrée Z est définie, en régime harmonique, comme le rapport de la pression acoustique moyenne P sur la surface S et du débit acoustique U traversant la surface plane S :

$$Z = \frac{P}{U}$$

L'impédance acoustique d'entrée Z est une grandeur complexe qui est fonction de la fréquence de l'onde qui se propage dans le guide d'onde GU. Le débit acoustique U est défini comme le produit de la vitesse moyenne u d'une particule traversant la surface S par la valeur de la surface S. Ainsi, l'impédance acoustique d'entrée Z est parfois exprimée comme le rapport de la pression acoustique moyenne P et de la vitesse moyenne v d'une particule. Les deux définitions ne diffèrent donc que par une constante, en l'occurrence la valeur de la surface S.

Il existe dans l'état de la technique plusieurs méthodes pour déterminer l'impédance acoustique d'entrée Z. La présente invention concerne celles qui sont basées sur la mesure d'une fonction de transfert $H_{12}$ entre deux grandeurs électriques $e_1$ et $e_2$ mesurées aux bornes de deux microphones notés M1 et M2, c'est-à-dire par des capteurs de pression dynamique. Le principe de cette méthode de détermination de l'impédance acoustique d'entrée Z est le suivant.

En supposant que le capteur d'impédance acoustique CA est linéaire et que les microphones M1 et M2 sont sensibles aux variations de pression acoustique P et de débit acoustique U à l'entrée du guide d'onde GU, c'est-à-dire au niveau du plan de référence PR, la fonction de transfert $H_{12}$ est donnée par l'équation (1)

$$H_{12} = \frac{e_2}{e_1} = K\frac{Z + \beta}{1 + \delta Z} \quad (1)$$

dans laquelle $K$, $\beta$, et $\delta$ sont des fonctions complexes de la fréquence d'excitation, fonctions qui reflètent le comportement acoustique du capteur d'impédance acoustique CA.

Une mesure de la fonction de transfert $H_{12}$ permet donc de déduire l'impédance acoustique d'entrée Z une fois que les fonctions $K$, $\beta$, et $\delta$ sont connues. En effet, à partir de l'équation (1), on obtient :

$$Z = \frac{H_{12}/K - \beta}{1 - \delta H_{12}/K} \quad (2)$$

Dans le cas où le microphone M2 est plutôt sensible à la pression acoustique *P* et le microphone M1 plutôt sensible au débit acoustique *U,* la fonction *K* peut alors être interprétée comme la réponse au premier ordre du capteur d'impédance acoustique, β et δ sont alors interprétés comme des paramètres correctifs.

Une des difficultés majeures de cette méthode vient du fait que les trois fonctions complexes *K,* β, et δ sont inconnues *a priori.* Pour les déterminer, une phase préalable dite d'étalonnage est mise en oeuvre. Cette phase d'étalonnage du capteur d'impédance acoustique CA consiste à fixer tour à tour trois charges dites étalon et pour chacune de ces trois charges d'effectuer une mesure d'impédance acoustique, dites impédance étalon. Pour plus de détails, se référer à J.-P. DALMONT 2001 J. Sound Vib. 243 (3), 427-439. *Acoustic impedance measurements Part I: a review).*

Les impédances étalons sont en général des tubes fermés, éventuellement de très grande longueur pour que l'impédance acoustique d'entrée au niveau du plan de référence PR soit assimilable à l'impédance caractéristique du tube. Mais ces charges étalons peuvent également être de longueur nulle pour que l'impédance acoustique d'entrée soit considérée comme infinie. La phase d'étalonnage à trois charges est relativement lourde à mettre en oeuvre du fait, notamment, de la nécessité que les trois mesures soient faites dans les mêmes conditions de température.

Afin d'alléger ces contraintes de mise en oeuvre, il est possible de déterminer un modèle physique du capteur d'impédance acoustique qui comporte moins d'inconnues, réduisant ainsi le nombre de mesures lors de la phase d'étalonnage. Par exemple, il est connu que des capteurs d'impédance acoustique, mettant en oeuvre une méthode de détermination d'impédance acoustique dite à deux microphones, peuvent être modélisés physiquement par un modèle dans lequel la seule inconnue est le rapport des sensibilités des microphones. La phase d'étalonnage est alors réduite à la mesure d'une seule impédance'étalon. Pour plus de détails, se référer à *ISO 10534-2, Acoustics -:- Determination of sound adsorption coefficient and impedance in impedance tubes -- Part 2: Transfer-function method.*

La Fig. 2 représente schématiquement un capteur d'impédance acoustique selon un état de la technique, dit à capillaire. Pour plus de détails, se référer à R. CAUSSE, J. KERGOMARD and X. LURTON 1984 Journal of the Acoustical Society of America 75(1), 241-254. *Input impedance of brass instruments - Comparaison between experiment and numerical models., et selon* J. KERGOMARD et R. CAUSSE 1986 Journal of the Acoustical Society of America 79(4), 1129-1140. *Measurement of acoustic impedance using a capillary: an attempt to achieve optimization.*

Le capteur d'impédance acoustique CA1 comporte un haut-parleur HP en guise de source et un tube capillaire ou réseau de tubes capillaires TU. L'une des extrémités du tube ou réseaux de tubes TU est reliée au guide d'onde GU tandis que l'autre des extrémités du tube ou réseau de tubes TU est reliée à la face avant du haut-parleur HP de manière à former une cavité CAV1.

Deux microphones M1 et M2, qui permettent de convertir une pression acoustique mesurée en une grandeur électrique, sont positionnés aux extrémités du le tube ou réseaux de tubes TU, chacun à l'une de ses extrémités, et chaque microphone M1 et M2 est relié à des moyens de calculs numériques (non représentés) qui permettent de calculer la fonction de transfert $H_{12}$ à partir des grandeurs électriques $e_1$ et $e_2$ mesurées aux bornes des deux microphones M1 et M2.

Lorsque le haut-parleur HP émet une onde à une fréquence donnée, c'est-à-dire qu'il excite le capteur d'impédance acoustique CA1, la pression acoustique $p_1$ sur la surface plane définie par un plan de référence PR1 parallèle à l'une des extrémités du tube ou réseau de tubes TU, c'est-à-dire la pression acoustique dans la cavité CA1, est mesurée par le microphone M1. Par ailleurs, la pression acoustique $p_2$ sur la surface S au niveau du plan de référence PR, est mesurée par le microphone M2. La pression acoustique p1 dans la cavité CAV1 est en première approximation proportionnelle au débit acoustique *U* de la source à travers le tube ou réseau de tubes TU.

Ainsi, la fonction de transfert $H_{12}$ de l'équation (1) est celle qui détermine le passage de l'onde de la cavité CAV1 vers l'entrée du guide GU au travers du tube ou réseau de tube TU. Elle s'écrit par

$$H_{12} = \frac{p_2 . s_2}{p_1 . s_1} \quad (3)$$

dans laquelle s1 et s2 désignent les sensibilités des microphones M1 et M2.

Bien que le capteur d'impédance acoustique CA1 procure des mesures qui permettent d'obtenir une détermination cohérente de l'impédance acoustique d'entrée *Z,* l'inventeur a observé que de fortes atténuations se produisent dans le tube ou réseau de tubes capillaires TU. Ces fortes atténuations induisent un faible rapport signal/bruit lorsque la fréquence d'excitation est de l'ordre de quelques dizaines de Hertz provoquant alors une détermination incohérente de la fonction de transfert et par voie de conséquence de l'impédance acoustique d'entrée *Z.* Ainsi, le capteur d'impédance acoustique CA1 est limité à une caractérisation d'éléments passifs acoustiques pour une plage de fréquences hautes, limitant ainsi la possibilité de caractériser de tels éléments pour des plages de fréquences s'étendant vers les basses fréquences.

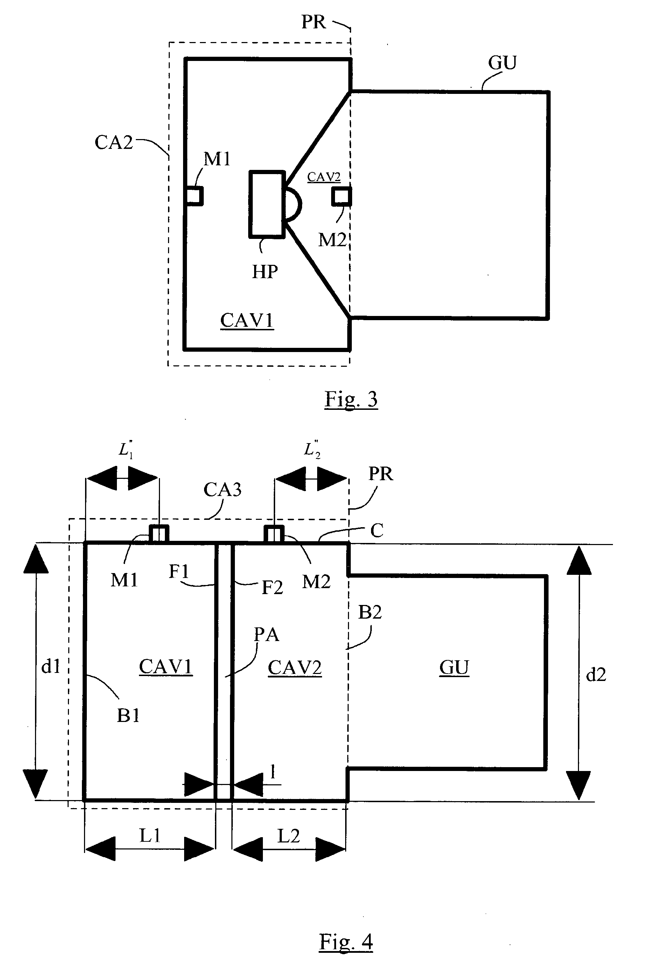

La Fig. 3 représente schématiquement un autre capteur d'impédance acoustique selon un état de la technique.

Pour plus de détails, se référer à R. SINGH and M. SCHARY 1978 Journal of the Acoustical Society of America 64, 995-1003. *Acoustical impedance measurements using singe sweep excitation and known volume velocity technique.*

Le capteur d'impédance acoustique CA2 comporte un haut-parleur HP en guise de source et deux microphones M1 et M2 reliés à des moyens de calculs numériques (non représentés) qui permettent de calculer la fonction de transfert $H_{12}$ à partir des grandeurs électriques $e_1$ et $e_2$ mesurées aux bornes des deux microphones M1 et M2.

L'avant et l'arrière du haut-parleur sont rendus étanches à l'air l'un vis-à-vis de l'autre. De plus, l'arrière du haut-parleur HP est fermé par une enveloppe rigide de manière à former une cavité CAV1, dite arrière, tandis que l'avant du haut-parleur HP forme une cavité CAV2 ouverte sur l'entrée du guide d'onde GU. L'un des microphones, en l'occurrence M1, est positionné sur l'arrière de la cavité CAV1, tandis que l'autre microphone, en l'occurrence M2, est positionné dans la cavité CA2 au niveau du plan de référence PR.

Lorsque que le haut-parleur HP émet une onde à une fréquence donnée, c'est-à-dire qu'il excite le capteur d'impédance acoustique CA2, d'une part la pression acoustique p1 dans la cavité arrière CAV1, est mesurée par le microphone M1 et, d'autre part, la pression acoustique $p_2$ dans la cavité CAV2 est mesurée par le microphone M2.

La pression acoustique p1 dans la cavité arrière CAV1 étant proportionnelle au débit acoustique $U$ de la source (au signe près), la fonction de transfert $H_{12}$ est alors déterminée par les moyens de calcul et l'impédance acoustique d'entrée $Z$ est déduite de cette fonction de transfert comme expliqué précédemment.

L'inventeur a observé que théoriquement le capteur d'impédance acoustique CA2 permet une détermination de l'impédance acoustique d'entrée $Z$ cohérente même pour des fréquences de quelques dizaines de Hertz. Cependant, la mise en oeuvre du capteur d'impédance acoustique CA2 est difficile notamment, d'une part, à cause des dimensions du haut-parleur HP qui doivent être faibles rendant alors sa réalisation délicate et, d'autre part, à cause de l'étanchéité entre la face avant et arrière du haut-parleur HP qui doit être parfaite pour ne pas biaiser la mesure des pressions acoustiques p1 et p2 par les microphones M1 et M2.

Pour pallier les problèmes exposés ci-dessus par les capteurs d'impédance acoustiques actuels, la présente invention concerne un capteur d'impédance acoustique prévu pour mesurer l'impédance acoustique d'entrée d'un guide d'onde, ledit capteur comportant une source couplée au guide d'onde par l'intermédiaire d'une cavité ouverte, dite cavité avant, délimitée par ladite source et débouchant sur ledit guide d'onde, et une cavité, dite cavité arrière, fermée par ladite source, la pression acoustique dans chaque cavité étant mesurée par un microphone. Ledit capteur est caractérisé en ce que ladite source est une pastille piezzo-électrique montée entre la cavité arrière qui est de forme cylindrique droit et la cavité avant qui est de forme cylindrique droit, la hauteur de la cavité avant et la hauteur de la cavité arrière étant respectivement inférieures au quart et à la moitié de la longueur d'onde de l'excitation émise par ladite pastille piezzo-électrique et les diamètres des deux cavités étant inférieurs à la moitié de ladite longueur d'onde.

Un tel capteur d'impédance acoustique permet la détermination de l'impédance acoustique d'entrée $Z$ pour une large plage de fréquences allant de quelques Hertz à quelques milliers de Hertz permettant ainsi une caractérisation complète d'un élément passif acoustique. Sa structure interne permet en effet de pouvoir obtenir des mesures de pression acoustique à basses fréquences *a contrario* des capteurs d'impédance acoustique de l'état de la technique sans pour autant requérir une mise en oeuvre délicate et donc coûteuse de ce capteur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1 représente schématiquement un capteur d'impédance acoustique associé à une charge,
La Fig. 2 représente schématiquement un capteur d'impédance acoustique selon un état de la technique,
La Fig. 3 représente schématiquement un autre capteur d'impédance acoustique selon un autre état de la technique,
La Fig. 4 représente schématiquement un capteur d'impédance acoustique selon l'invention, et
La Fig. 5 illustre schématiquement l'utilisation du capteur d'impédance acoustique pour la caractérisation de matériau.

A la Fig. 4, le capteur d'impédance acoustique CA3 comporte une pastille piezzo-électrique PA en guise de source, une cavité arrière CAV1, une cavité avant CAV2 et deux microphones M1 et M2 reliés à des moyens de calculs numériques (non représentés) qui permettent de calculer la fonction de transfert $H_{12}$ à partir des grandeurs électriques $e_1$ et $e_2$ mesurées aux bornes des deux microphones M1 et M2.

La cavité arrière CAV1 a une forme cylindrique droit de diamètre $d_1$ et de longueur L1. L'une de ses bases, en l'occurrence B1, est fermée tandis que l'autre de ses bases est ouverte. Par exemple, la cavité CAV1 est obtenue à partir d'un corps cylindrique plein dans lequel est réalisé un trou borgne de diamètre $d_1$.

La cavité avant CAV2 a une forme cylindrique droit de diamètre $d_2$ et de longueur L2 dont les deux bases sont ouvertes. Par exemple, la cavité CAV2 est obtenue à partir d'un corps cylindrique plein dans lequel est percé un trou de diamètre $d_2$.

La pastille piezzo-électrique PA, de forme cylindrique droit de longueur *l*, est montée pincée entre les cavités CAV1 et CAV2 de manière à rendre la cavité CAV1 étanche à l'air et à rendre les deux cavités CAV1 et CAV2 étanches à l'air l'une de l'autre. Pour cela, la base ouverte de la cavité CAV1 est fermée par une face de la pastille piezzo-électrique PA, tandis que l'une des bases de la cavité avant CAV2 est fermée par l'autre face de la pastille piezzo-électrique PA. L'autre base de la cavité CAV2, notée B2, reste ouverte de manière à déboucher sur un guide d'onde GU à mesurer. En effet, lorsqu'un guide d'onde GU est fixé sur le capteur d'impédance acoustique CA3, une extrémité de ce guide d'onde est fixée de manière étanche à l'air avec la base $B_2$ de manière à ce que le plan de référence PR soit parallèle à la section transversale du guide d'onde GU.

Le microphone M1 est associé à la cavité arrière CAV1 de manière à pouvoir mesurer la pression acoustique p1 dans la cavité CAV1 tandis que le microphone M2 est associé à la cavité avant CAV2 de manière à pouvoir mesurer la pression acoustique p2 dans la cavité CAV2.

On peut noter que le positionnement des microphones M1 et M2 peut être quelconque sur chacune des cavités CAV1 et CAV2, c'est-à-dire que les distances L"1 et L"2 ne sont pas nécessairement égales à la moitié des longueurs L1 et L2.

La pastille piezzo-électrique PA est utilisée en tant que source d'excitation du capteur d'impédance acoustique CA3, c'est-à-dire qu'elle est destinée à être soumise à une tension électrique qui provoque sa déformation sous l'effet piezzo-électrique inverse. Cette déformation induit alors une légère modification du volume de chaque cavité et par voie de conséquence une modification des pressions acoustiques à l'intérieur de chaque cavité CAV1 et CAV2.

La pression acoustique p1 mesurée dans la cavité arrière CAV1 est alors, en considérant uniquement le mode d'onde plan, c'est-à-dire selon une approximation de premier ordre, proportionnelle au débit acoustique $U$ généré par la pastille piezzo-électrique PA.

L'impédance acoustique d'entrée $Z$ est alors donnée par l'équation (2) une fois la fonction de transfert $H_{1,2}$ déterminée à partir de mesures des pressions acoustiques prises par les microphones M1 et M2.

Le capteur d'impédance acoustique CA3 présente l'avantage de pouvoir être modélisé physiquement par un modèle à une seule fonction inconnue : le rapport entre les sensibilités s1 et s2 des deux microphones.

En effet, la fonction de transfert $H_{12}$ entre les microphones des cavités CAV1 et CAV2 du capteur d'impédance acoustique CA3 est donnée par l'équation (1) avec

$$\begin{cases} K = -j\frac{1}{Z_{c1}}.\frac{s_2}{s_1}.\frac{\sin(k.L_1).\cos(k.L_2^{"})}{\cos(k.L_1^{"}).\cos(k.L_2)} \\ \beta = j.Z_{c2}.\tan(k.L_2^{"}) \\ \delta = j.\frac{\tan(k.L_2)}{Z_{c2}} \end{cases} \quad (4)$$

dans lesquelles, $L_1^{"}$, $L_2^{"}$ $L_1$, $L_2$, sont les dimensions du capteur d'impédance acoustique, $Z_{c1} = \frac{\rho.c}{S_1}$ et $Z_{c2} = \frac{\rho.c}{S_2}$ sont les impédances caractéristiques respectivement de la cavité CAV1 et de la cavité CAV2, p étant la densité de l'air, $c$ la vitesse du son, $k=\omega/c$ est le nombre d'ondes, $S_1$ la surface de la section de la cavité CAV1 donnée par $S_1 = \frac{\pi.d_1^2}{4}$ et $S_2$ la surface la section de la cavité avant CAV2 donnée par $S_2 = \frac{\pi.d_2^2}{4}$ où d$_1$ et $d_2$ sont les diamètres des cavités CAV1 et CAV2.

Afin d'éviter des résonances à l'intérieur des cavités avant et arrière, les hauteurs L1, L"1 et L2 respectent une limite supérieure donnée par

$$\begin{cases} L_1 < \dfrac{c}{2f_{max}} \\[2ex] L''_1 < \dfrac{c}{4f_{max}} \\[2ex] L_2 < \dfrac{c}{4f_{max}} \end{cases}$$

Et les diamètres $d_1$ et $d_2$ respectent également une limite supérieure donnée par

$$\begin{cases} d_1 < \dfrac{1,84.c}{\pi.f_{max}} \\[2ex] d_2 < \dfrac{1,84.c}{\pi.f_{max}} \end{cases}$$

dans lesquelles $f_{max}$ est la borne supérieure de la plage de fréquences d'utilisation.

Ainsi, de par sa structure, le capteur d'impédance acoustique CA3 peut être caractérisé physiquement par un modèle donné par l'équation (2) qui ne comporte qu'une seule inconnue $K$.

En effet, les paramètres $\beta$ *et* $\delta$ sont connus *a priori* car fonction des dimensions et de l'impédance caractéristique de la cavité avant CAV2 et du positionnement du microphone M2 dans la cavité CAV2.

Par contre, le paramètre $K$ est inconnu du fait que le rapport $\dfrac{s_2}{s_1}$ entre les sensitivités des deux microphones n'est pas connu *a priori.*

Une seule phase d'étalonnage est donc nécessaire pour la détermination du rapport des sensibilités des microphones M1 et M2. Pour cela, une charge étalon est fixée au capteur d'impédance acoustique CA3 au niveau du plan de référence PR et la pastille piezzo-électrique PA est alors excitée électriquement pour créer un débit acoustique *U.* Cette charge étalon est définie de manière à ce que son impédance soit 'infinie'. Dans ce cas, suite à la mesure des pressions acoustiques p1 et p2 et à la détermination de la fonction de transfert, appelée $H_\infty$, le paramètre $K$ est déterminé par :

$$K = H_\infty \delta$$

Selon un mode de réalisation du capteur acoustique d'impédance CA3, les hauteurs L1, L"$_1$ et L2 valent respectivement 21.4mm, 9.5mm 13.5mm et le diamètre $d_1$ vaut 18mm et le diamètre $d_2$ vaut 16mm.

Dans ces conditions, la plage de fréquences d'utilisation du capteur d'impédance acoustique CA3 s'étend de quelques Hertz à 6 kHertz permettant ainsi une caractérisation d'un élément passif acoustique sur une très large gamme de fréquences.

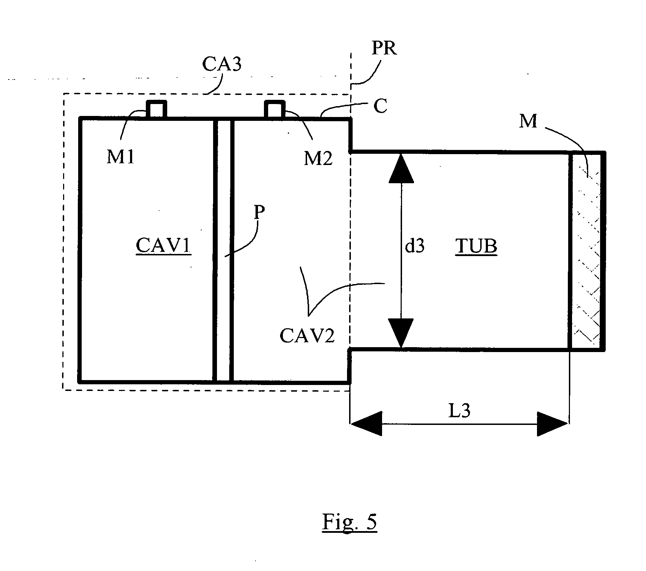

A titre d'illustration de l'utilisation du capteur d'impédance acoustique CA3, à la Fig. 5 est schématiquement représentée l'utilisation du capteur d'impédance acoustique CA3 pour la caractérisation de matériau.

Pour cela, un tube rigide TUB de diamètre d3 et fermé à l'une de ses extrémités est fixé au capteur d'impédance acoustique CA3 au niveau du plan de référence PR, c'est-à-dire que l'extrémité ouverte du tube TUB est fixée de manière étanche au capteur. Au fond de ce tube TUB est placé un échantillon du matériau à caractériser, la surface du matériau côté capteur étant distante du plan de référence PR d'une distance L3 supérieure au diamètre d3 du tube TUB.

Le capteur, une fois étalonné, est excité par la pastille piezzo-électrique PA et des mesures de pressions acoustiques p1 et p2 sont relevées. Les moyens de calculs associés aux microphones M1 et M2 déterminent alors la fonction de transfert $H_{1,2}$ afin d'obtenir l'impédance acoustique d'entrée $Z$ permettant alors la détermination de caractéristiques intrinsèques du matériau.

Par exemple, le coefficient d'absorption du matériau à caractériser $\alpha$ est donné par

$$\alpha = 1 - \left| \mathrm{Re} \right|^2$$

avec Re le coefficient de réflexion donné par

$$\mathrm{Re} = \frac{Z - Z_c}{Z + Z_c}$$

dans laquelle $Z_c = \dfrac{\rho c}{S_3}$ où $S_3 = \dfrac{\pi d_3^{\,2}}{4}$ est la surface de la section du tube TUB.

## Revendications

1. Capteur d'impédance acoustique prévu pour mesurer l'impédance acoustique d'entrée (Z) d'un guide d'onde (GU), ledit capteur comportant une source couplée au guide d'onde (GU) par l'intermédiaire d'une cavité ouverte (CAV2), dite cavité avant, délimitée par ladite source et débouchant sur ledit guide d'onde (GU), et une cavité (CAV1), dite cavité arrière, fermée par ladite source, la pression acoustique dans chaque cavité étant mesurée par un microphone (M1, M2)
ledit capteur est **caractérisé en ce que** ladite source est une pastille piézo-électrique (PA) montée entre la cavité arrière (CAV1) qui est de forme cylindrique droite et la cavité avant (CAV2) qui est de forme cylindrique droite, la hauteur (L2) de la cavité avant et la hauteur (L1) de la cavité arrière étant respectivement inférieure au quart et à la moitié de la longueur d'onde de l'excitation émise par ladite pastille piézo-électrique (PA) et les diamètres (d1 et d2) des deux cavités (CAV1 et CAV2) étant inférieurs à la moitié de ladite longueur d'onde.

2. Capteur selon la revendication 1, **caractérisé en ce que** chaque microphone est relié à des moyens de calculs numériques qui permettent de calculer une fonction de transfert $H_{12}$ à partir des grandeurs électriques mesurées aux bornes des deux microphones (M1 et M2), la fonction de transfert est donnée par

$$H_{12} = K \frac{Z + \beta}{1 + \delta Z}$$

dans laquelle $K$, $\beta$, et $\delta$ sont des fonctions complexes de la fréquence de l'excitation émise par la pastille piézo-électrique, qui sont définies par

$$\left\{ \begin{array}{c} K = -j \dfrac{1}{Z_{c1}} . \dfrac{s_2}{s_1} . \dfrac{\sin(k.L_1).\cos(k.L_2'')}{\cos(k.L_1'').\cos(k.L_2'')} \\[4mm] \beta = j.Z_{c2}.\tan(k.L_2'') \\[4mm] \delta = j. \dfrac{\tan(k.L_2)}{Z_{c2}} \end{array} \right\}$$

avec $L_1$, $L_2$, $L_1''$, $L_2''$ respectivement les hauteurs des parties arrière et avant du capteur et le positionnement des microphones vis-à-vis des bases du capteur, $Z_{c1} = \dfrac{\rho.c}{S_1}$ et $Z_{c2} = \dfrac{\rho.c}{S_2}$ les impédances caractéristiques respectivement de la cavité avant (CAV1) et de la cavité arrière (CAV2), p la densité de l'air, c la vitesse du son, $k = \omega/c$

est le nombre d'ondes, $S_1$ la surface de la section de la cavité CAV1 donnée par $S_1 = \dfrac{\pi.d_1^2}{4}$ et $S_2$ la surface la

section de la cavité avant CAV2 donnée par $S_2 = \dfrac{\pi.d_2^2}{4}$ où $d_1$ et $d_2$ les diamètres des deux cavités.

3. Capteur selon la revendication 2, **caractérisé en ce que** la fonction complexe $K$ est déterminée par une phase d'étalonnage.

4. Capteur selon la revendication 3, **caractérisé en ce que** une charge étalon d'impédance infinie est utilisée lors de ladite phase d'étalonnage.

**Patentansprüche**

1. Akustischer Impendanzsensor, der dazu bestimmt ist, die akustische Eingangsimpedanz (Z) eines Wellenleiters (GU) zu messen, wobei der Sensor eine Quelle, die mit dem Wellenleiter (GU) über einen offenen Hohlraum (CAV2) verbunden ist, wobei der vordere Hohlraum von der Quelle begrenzt wird und auf dem Wellenleiter (GU) mündet, und einen Hohlraum (CAV1), genannt hinterer Hohlraum, der von der Quelle geschlossen wird, umfasst, wobei der Schalldruck in jedem Hohlraum von einem Mikrophon (M1, M2) gemessen wird, wobei der Sensor **dadurch gekennzeichnet ist, dass** die Quelle eine piezoelektrische Platte (PA) ist, die zwischen dem hinteren Hohlraum (CAV1), der eine gerade zylindrische Form aufweist, und dem vorderen Hohlraum (CAV2), der eine gerade zylindrische Form aufweist, angebracht ist, wobei die Höhe (L2) des vorderen Hohlraums und die Höhe (L1) des hinteren Hohlraums jeweils kleiner sind als ein Viertel bzw. die Hälfte der Anregungswellenlänge, die von der piezoelektrischen Platte (PA) emittiert wird, und wobei die Durchmesser (d1 und d2) der beiden Hohlräume (CAV1 und CAV2) kleiner sind als die Hälfte der Wellenlänge.

2. Sensor nach Anspruch 1, **dadurch gekennzeichnet, dass** jedes Mikrophon mit digitalen Berechnungsmitteln verbunden ist, die es ermöglichen, eine Übertragungsfunktion $H_{12}$ aus elektrischen Größen zu berechnen, die an den Ausgängen der beiden Mikrophone (M1 und M2) gemessen werden, wobei die Übertragungsfunktion gegeben ist durch:

$$H_{12} = K\,\frac{Z + \beta}{1 + \delta Z}$$

worin K, $\beta$, und $\delta$ komplexe Funktionen der Anregungsfrequenz sind, die von der piezoelektrischen Platte emittiert wird, die definiert sind durch

$$\begin{cases} K = -j\,\dfrac{1}{Z_{c1}}.\dfrac{s_2}{s_1}.\dfrac{\sin(k.L_1).\cos(k.L_2'')}{\cos(k.L_1'').\cos(k.L_2)} \\[2mm] \beta = j.Z_{c2}.\tan(k.L_2'') \\[2mm] \delta = j.\dfrac{\tan(k.L_2)}{Z_{c2}} \end{cases}$$

wobei $L_1$, $L_2$, $L'_1$, $L'_2$ jeweils die Höhen der hinteren und vorderen Teile des Sensors und die Positionierung der Mikrophone gegenüber den Böden des Sensors sind, $Z_{c1} = \dfrac{\rho.c}{S_1}$ und $Z_{c2} = \dfrac{\rho.c}{S_2}$ die Impedanzen sind, die jeweils für den vorderen Hohlraum (CAV1) und den hinteren Hohlraum (CAV2) charakteristisch sind, p die Luftdichte ist, c die Schallgeschwindigkeit ist, $k = \omega/c$ die Anzahl der Wellen ist, $S_1$ die Oberfläche des Querschnitts des Hohlraums CAV1, gegeben durch

$$S_1 = \frac{\pi.d_1^2}{4}$$

ist, und $S_2$ die Oberfläche des Querschnitts des vorderen Hohlraums CAV2, gegeben durch

$$S_2 = \frac{\pi.d_2^2}{4}$$

ist, worin $d_1$ und $d_2$ die Durchmesser der beiden Hohlräume sind.

**3.** Sensor nach Anspruch 2, **dadurch gekennzeichnet, dass** die komplexe Funktion $K$ durch eine Kalibrierungsphase bestimmt ist.

**4.** Sensor nach Anspruch 3, **dadurch gekennzeichnet, dass** während der Kalibrierungsphase eine unendliche Kalibrierungsimpedanz verwendet wird.

**Claims**

**1.** An acoustic impedance sensor designed to measure the input acoustic impedance (Z) of a waveguide (GU), the said sensor comprising a source coupled to the waveguide (GU) by means of an open cavity (CAV2), called the forward cavity, delimited by the said source and opening onto the said waveguide (GU), and a cavity (CAV1), called the rear cavity, closed by the said source, the acoustic pressure in each cavity being measured by a microphone (M1, M2),
the said sensor is **characterised in that** the said source is a piezoelectric wafer (PA) mounted between the rear cavity (CAV1) which has the form of a straight cylinder, and the forward cavity (CAV2) which has the form of a straight cylinder, the height (L2) of the forward cavity and the height (L1) of the rear cavity being respectively less than a quarter and less than half the length of the excitation wave emitted by the said piezoelectric wafer (PA) and the diameters (d1 and d2) of the two cavities (CAV1 and CAV2) being less than half said wavelength.

**2.** The sensor of claim 1 wherein each microphone is connected to digital calculation means making it possible to calculate a transfer function $H_{12}$ from electric variables measured at the terminals of the two microphones (M1 and M2), the transfer function being given by

$$H_{12} = K\frac{Z + \beta}{1 + \delta Z}$$

where $K$, $\beta$, and $\delta$ are complex functions of the excitation frequency emitted by the piezoelectric wafer, which are defined by

$$\left\{ \begin{array}{l} K = -j\,\dfrac{1}{Z_{c1}}\cdot\dfrac{s_2}{s_1}\cdot\dfrac{\sin(k.L_1).\cos(k.L_2^{"})}{\cos(k.L_1^{"}).\cos(k.L_2)} \\[4mm] \beta = j.Z_{c2}.\tan(k.L_2^{"}) \\[4mm] \delta = j.\dfrac{\tan(k.L_2)}{Z_{c2}} \end{array} \right\}$$

where $L_1$, $L_2$, $L"_1$, $L"_2$ are respectively the heights of the rear and forward part of the sensor and the positioning of the microphones relative to the bases of the sensor, $Z_{c1} = \dfrac{\rho.c}{S_1}$ et $Z_{c2} = \dfrac{\rho.c}{S_2}$ are the characteristic impedances respectively of the forward cavity (CAV1) and rear cavity (CAV2), p is the density of the air, c is the speed of sound,

$k = \omega/c$ is the number of waves, $S_1$ is the cross-sectional area of the cavity CAV1 given by $S_1 = \dfrac{\pi.d_1^2}{4}$ and $S_2$ is

the cross-sectional area of the forward cavity CAV2 given by $S_2 = \dfrac{\pi.d_2^2}{4}$ where d1 and $d2$ are the diameters of the two cavities.

3. The sensor of claim 2 wherein the complex function *K* is determined by a calibration phase.

4. The sensor of claim 3 wherein an infinite impedance calibration charge is used during the said calibration phase.

PR

CA

S

GU

Fig. 1

CA1

PR

PR1

HP

M1    M2

CAV1    TU    S

GU

Fig. 2

Fig. 3

Fig. 4

EP 2 310 815 B1

Fig. 5

13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.-P. DALMONT.** *J. Sound Vib.,* 2001, vol. 243 (3), 427-439
- **R. CAUSSE ; J. KERGOMARD ; X. LURTON.** *Journal of the Acoustical Society of America,* 1984, vol. 75 (1), 241-254
- **J. KERGOMARD ; R. CAUSSE.** *Journal of the Acoustical Society of America,* 1986, vol. 79 (4), 1129-1140
- **R. SINGH ; M. SCHARY.** *Journal of the Acoustical Society of America,* 1978, vol. 64, 995-1003